# EUROPEAN PATENT APPLICATION

(11) **EP 1 018 607 A2**
(43) Date of publication of application: **12.07.2000**
(21) Application number: 99310375.3
(22) Date of filing: 21.12.1999
(51) Int. Cl.: F16F 9/36

(54) **Gas spring**

(30) Priority: 06.01.1999 GB 9900119
(71) Applicant: DRAFTEX INDUSTRIES LIMITED, Edinburgh EH2 3AP, Scotland (GB)
(72) Inventor: Franceschetti, Gaelle, 25440 Quingey (FR)
(74) Representative: Mackenzie, Andrew Bryan

(57) **Abstract**

A gas spring (2) comprising an elongate housing (4) which is closed at a first end (6), a piston member (14) slidable within the housing (6) and forming a gas-tight seal against the interior surface of the housing (6), a piston rod (12) attached to the piston member (14) and extending out of the second end of the housing (6), and a rod guide (26) located within the housing (6) generally at its second end for guiding the piston rod (12) as the piston member (14) slides in the housing (6), the rod guide (26) being made of thermoplastics material.

## Description

This invention relates to a gas spring.

This type of spring may be used, for example, in automotive applications to assist in opening and/or closing vehicles doors such as bonnets, boots and tailgates.

According to a first aspect of the invention, there is provided a gas spring, comprising an elongate housing which is closed at a first end, a piston member slidable within the housing and forming a gas-tight seal against the interior surface of the housing, a piston rod attached to the piston member and extending out of the second end of the housing, and a rod guide located within the housing generally at its second end for guiding the piston rod as the piston member slides in the housing, the rod guide being made of thermoplastics material.

A second aspect of the invention provides a thermoplastics rod guide for guiding the piston rod of a gas spring.

In a third aspect, the invention provides a gas spring, comprising an elongate housing which is closed at a first end, a piston member slidable within the housing and forming a gas-tight seal against the interior surface of the housing, a piston rod attached to the piston member and extending out of the second end of the housing, and a rod guide located within the housing generally at its second end for guiding the piston rod as the piston member slides in the housing, the rod guide being made of a partially aromatic and semicrystalline thermoplastics material.

Gas springs embodying the invention will now be described by way of example, with reference to the drawings in which:
Figure 1 is an axial cross section of a gas spring;
Figure 2 is an enlarged axial cross section through a rod guide in the spring of Figure 1;
Figure 3 is an enlarged plan view of the rod guide in the spring of Figure 1;
Figure 4 is an enlarged axial cross section through an alternative rod guide; and
Figure 5 is an enlarged plan view of an alternative rod guide.

A detailed description of the construction of gas springs to which the invention described below may be applied will be found in French patent publication No. FR-A-2582764, the disclosure of which is incorporated herein by reference. This type of gas spring incorporates a cylindrical housing which is closed at one end and which at its other end allows the through passage of a piston rod. The piston rod slides in a rod guide located generally at this second end. A sealing member separate from the rod guide forms a seal with the rod and the interior of the cylindrical housing so that the two chambers defined by a slidable piston member may be filled with gas under pressure. The pressurised gas is used to provide a spring force which tends to push the piston rod out of the cylindrical housing.

The guide is used to guide the rod as it slides, without creating significant friction.

A problem with these prior art guides has been the selection of a construction material.

It will be appreciated that the gas pressures reach high static and/or operational levels, and also that the gas spring may be subjected to high temperatures in operation and/or during manufacture. Typical values for these parameters are respectively more than 300 bar and about 110°C.

Thus with these operating conditions in mind, the rod guide has previously been made from materials known to be pressure and heat resistant, such as phenoplast (bakelite) or metal. These materials have been found not to deform significantly when subjected to the force resulting from the gas pressure in the upper chamber 20 even when softened by high temperatures. However, the use of such materials adds to the cost of construction of a gas spring.

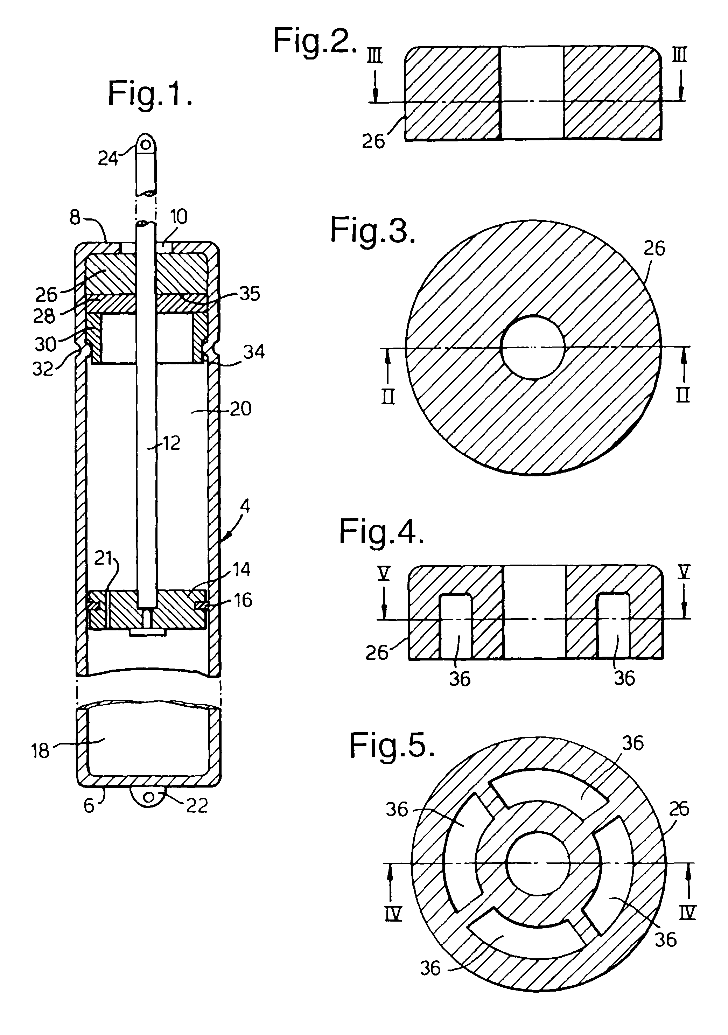

With reference to Figure 1, a gas spring 2 in accordance with the invention has a generally cylindrical housing 4 which is closed at a first end 6. At the other end 8, an aperture 10 is formed through which a piston rod 12 passes. The piston rod 12 is fixed to a piston member 14 which slides in the housing 4 and includes O-ring sealing means 16.

The piston member 14 divides the housing 4 into two chambers 18 and 20. A duct 21 in the piston member 14 provides a gas communication between the two chambers 18 and 20.

The closed end of the housing 22 and the distal end 24 of the piston rod 12 are each adapted for fixing to a vehicle door, boot lid, tailgate or bonnet etc. The chambers 18 and 20 are filled with gas under pressure. Since the surface areas of the respective sides of the piston member 14 are unequal, the piston member 14 is generally forced in an upward direction in the Figure. This has the effect of pushing the piston rod 12 out of the housing 4.

At the upper end of the housing, the piston rod 12 passes through a rod guide 26.

The rod guide 26 is sandwiched between a sealing member 28 and the folded-over end 8 of the housing 4.

The sealing member 28 is held in place against the rod guide 26 by a locking ring 30 which co-operates with a circumferential formation 32 formed in the housing 4. As will be seen from the Figure, the formation 32 is in the form of an inwardly directed ridge which co-operates with the reduced diameter portion 34 of the locking ring 30 substantially to prevent axial movement of the rod guide 26 and sealing member 28.

The sealing member 28 seals to the external surface of the rod and to the internal surface of the housing 4 and prevents gas escaping from the gas spring. The lower surface 35 of the rod guide 26 is generally planar to support the sealing member 28 in an optimal configuration for sealing.

The pressures reached in the chambers 18 and 20 will depend in part on the application of the spring and in particular the weight of the vehicle door which is to be supported. The rod guide 26 must resist the pressure (which is applied to it via the sealing member 28) and must also resist deformation at operating pressures and temperatures.

It has now been found that thermoplastics material may be used for the manufacture of the guide 26. Figures 2 and 3 show a solid form of the rod guide 26. However, it has been found that rod guides of the forms shown in Figures 4 and 5, with voids 36, also perform satisfactorily.

The use of thermoplastics for the rod guide may substantially reduce the cost of manufacturing this type of gas spring. Furthermore, not only is this type of material cheaper than the alternative materials such as phenoplast, but it provides reduced friction with the piston rod 12.

The rod guide 26 is preferably formed from a polyamide such as a partially aromatic and semicrystalline copolyamide. Furthermore, the rod guide may include glass and/or mineral fibres. The fibres are preferably incorporated in a proportion by weight of between 30% and 60% and more preferably between 50% and 60%.

It will be appreciated that the gas spring construction and the detailed construction of the rod guide may be varied in a manner known in the art.

## Claims

1. A gas spring (12), comprising an elongate housing (4) which is closed at a first end (6), a piston member (14) slidable within the housing (6) and forming a gas-tight seal against the interior surface of the housing (6), a piston rod (12) attached to the piston member (14) and extending out of the second end of the housing (6), and a rod guide (26) located within the housing (6) generally at its second end for guiding the piston rod (12) as the piston member (14) slides in the housing (6), the rod guide (26) being made of thermoplastics material.

2. A gas spring according to claim 1, wherein the housing (6) is generally cylindrical and the rod guide is generally annular.

3. A gas spring according to claim 1 or claim 2, wherein the thermoplastics material is a polyamide material.

4. A gas spring according to claim 3, wherein the thermoplastics material is a partially aromatic and semicrystalline copolyamide.

5. A gas spring according to any preceding claim, wherein the thermoplastics material includes glass and/or mineral fibres.

6. A gas spring according to claim 5, wherein the glass and/or mineral fibres are included in a proportion of from 30% to 60% by weight.

7. A gas spring according to claim 5, wherein the glass and/or mineral fibres are included in a proportion of from 50% to 60% by weight.

8. A gas spring according to any preceding claim, including a sealing member (28) through which the piston rod (12) passes and which is operable to provide a gas-tight seal generally at the second end of the housing (6).

9. A gas spring according to claim 8, wherein the sealing member (28) abuts the rod guide (26).

10. A gas spring according to claim 8 or claim 9, wherein the sealing member (28) is located between the rod guide (26) and the piston member (14).

11. A gas spring according to any of claims 8 to 10, including a locking member (30) which cooperates with a formation (32) in the housing wall to hold the sealing member (28) and rod guide (26) in place at the second end of the housing (6).

12. A thermoplastics rod guide (26) for guiding the piston rod of a gas spring.

13. A gas spring (12), comprising an elongate housing (4) which is closed at a first (6), a piston member (14) slidable within the housing (6) and forming a gas-tight seal against the interior surface of the housing (6), a piston rod (12) attached to the piston member (14) and extending out of the second end of the housing (6), and a rod guide (26) located within the housing (6) generally at its second end for guiding the piston rod (12) as the piston member (14) slides in the housing (6), characterised by the rod guide (26) being made of a partially aromatic and semicrystalline thermoplastics material.
